# EUROPÄISCHE PATENTSCHRIFT

(11) **EP 1 393 836 B1**
(45) Veröffentlichungstag und Bekanntmachung des Hinweises auf die Patenterteilung: **10.10.2007**
(21) Anmeldenummer: 03018991.4
(22) Anmeldetag: 21.08.2003
(51) Int. Cl.: B21K 1/36, F01D 5/34

(54) **Verfahren zur Herstellung von Rohlingen für beschaufelter Bauteile und Gesenk**
Method for producing blanks for bladed elements and forging die
Méthode de fabrication d'ébauches pour éléments aubagés et matrice de forgeage

(30) Priorität: 02.09.2002 DE 10240942; 18.09.2002 DE 10243169
(43) Veröffentlichungstag der Anmeldung: 03.03.2004
(73) Patentinhaber: PRÄWEST Präzisionswerkstätten Dr.-Ing. Heinz-Rudolf Jung GmbH & Co., 28757 Bremen (DE)
(72) Erfinder: Jung, Heinz-Rudolf, Dr.-Ing., 28790 Schwanewede (DE)
(74) Vertreter: Möller, Friedrich

(56) Entgegenhaltungen:
- FR-A- 2 701 659
- GB-A- 717 163
- US-A- 4 527 410

## Beschreibung

Die Erfindung betrifft ein Verfahren zur Herstellung von Rohlingen für beschaufelte Bauteile gemäß dem Oberbegriff des Anspruchs 1. Die Erfindung betrifft des Weiteren ein Gesenk zum Schmieden von mit mindestens einer Hinterschneidung versehenen Rohlingen für beschaufelte Bauteile gemäß dem Oberbegriff des Anspruchs 11.

Beschaufelte Bauteile dienen zur Herstellung von Strömungsmaschinen. Insbesondere werden beschaufelte Bauteile verwendet für Laufräder, Leiträder oder auch stillstehende Leitkränze für Verdichter und Turbolader. Bei den beschaufelten Bauteilen kann es sich aber auch um Propeller oder einzelne Schaufeln von Strömungsmaschinen handeln.

Die genannten beschaufelten Bauteile werden überwiegend aus geschmiedeten Rohlingen gebildet, die anschließend spanend bearbeitet werden, und zwar vorzugsweise durch mehrachsiges (z. B. fünfachsiges) Fräsen. Die Rohlinge werden durch Freiform- oder Gesenkschmieden hergestellt, die Rohlinge erhalten beim Schmieden lediglich eine äußere Hüllkontur des Bauteils zuzüglich des Schmiedeaufmaßes. Es handelt sich dabei um einen verhältnismäßig grob vorgeformten Rohling, dessen Volumen um über 60 %, vielfach bis zu 80 %, zerspant werden muss, um daraus das gewünschte beschaufelte Bauteil zu erhalten. Eine solchermaßen umfängliche Zerspanung des geschmiedeten Rohlings erfordert lange Maschinenlaufzeiten, weswegen die nach bekannten Verfahren hergestellten beschaufelten Bauteile sehr teuer in der Herstellung sind. Außerdem geht beim großvolumigen Zerspanen viel Material verloren. Vor allem bei Bauteilen aus teuren Werkstoffen wie z. B. Titan ist das unwirtschaftlich.

Aus der FR 2 701 659 A ist eine Pressform zur Herstellung eines Rades mit angepressten Schaufeln bekannt. Die Pressform verfügt über zwei Matrizen, wobei eine obere Matrize und eine untere Matrize eingesetzt ist. Zur Herstellung hinterschnittener Schaufeln sind schräge Gleitbacken am Außenumfang der oberen Matrize und dazu korrespondierende Spiralnuten an der unteren Matrize vorgesehen. Dadurch erfolgt ein Verdrehen der oberen Matrize gegenüber der unteren Matrize, wenn zum Entformen des Rades die Matrizen auseinanderbewegt werden. Die Pressform verfügt außerdem über einen Kolben, der in der oberen Matrize auf- und abbewegbar ist. Mit dem Kolben wird ein erhitzter Rohling zur Herstellung des Rads in die Hohlräume der Form gedrückt. Die aus der FR 2 701 659 A bekannte Pressform verfügt über einen relativ komplexen Aufbau, insbesondere wegen der erforderlichen passgenauen Spiralnuten und Gleitbacken an den Matrizen und dem zusätzlichen Stempel.

Hiervon ausgehend liegt der Erfindung die Aufgabe zugrunde, ein Verfahren und ein Gesenk zu schaffen, womit geschmiedete Rohlinge zur Herstellung beschaufelter Bauteile im Vergleich zu bekannten Verfahren wirtschaftlicher herstellbar sind.

Ein zur Lösung dieser Aufgabe dienendes Verfahren zur Herstellung von Rohlingen für beschaufelte Bauteile für insbesondere Strömungsmaschinen weist die Merkmale des Anspruchs 1 auf. Dieses Verfahren zeichnet sich besonders dadurch aus, dass der Rohling "konturnah" geschmiedet wird. Unter konturnah ist in diesem Zusammenhang das Schmieden zu verstehen, das nicht nur wie beim Stand der Technik einen Rohling schafft, der der Hüllkontur des fertigen Bauteils entspricht, sondern auch eine Profilierung in Gestalt mindestens einer Hinterschneidung bildet, die sich innerhalb der Hüllkontur befindet. Vorzugsweise wird der Rohling - wenn es das fertige Bauteil erfordert - mit mehreren Hinterschneidungen, und zwar entweder allen Hinterschneidungen oder nur einem Teil der Hinterschneidungen versehen. Die Hinterschneidungen kommen dadurch zustande, dass die zu schmiedende Kontur des beschaufelten Bauteils in Längsrichtung desselben bzw. in Pressrichtung zurückspringt, insbesondere negativ geneigt ist. Dadurch, dass der Rohling bereits beim Gesenkschmieden Hinterschneidungen erhält, ist auch bei Bauteilen mit komplexer Kontur, beispielsweise Laufrädern mit schräggerichteten Schaufeln, ein konturnahes Schmieden möglich. Insbesondere können Zwischenräume zwischen benachbarten schräggerichteten Schaufeln soweit der Kontur des fertigen Bauteils angenähert werden, dass nur noch ein solches Übermaß vorhanden ist, das im Wesentlichen dem Schmiedemaß entspricht. Dadurch kann das zu zerspanende Materialvolumen auf unter 40 % des Rohlingsvolumens gesenkt werden. Der Rohling wird beim Gesenkschmieden mit Hinterschneidungen versehen, indem mindestens ein Teil des Gesenks, vorzugsweise ein Obergesenk, verdreht wird. Insbesondere bei rotationssymmetrischen beschaufelten Bauteilen wie zum Beispiel Laufrädern, Leiträdern oder Propellern, werden Obergesenk und/oder das Untergesenk um eine in Pressrichtung verlaufende Drehachse verdreht. Das Verdrehen des Obergesenks oder - des Untergesenks erfolgt beim Schmieden um das Maß der Hinterschneidung. Entsprechend wird das Obergesenk oder das Untergesenk zurückgedreht, wenn nach dem Schmieden das Gesenk geöffnet wird. Denkbar ist es aber auch, sowohl das Obergesenk, als auch das Untergesenk gleichzeitig oder nacheinander zu verdrehen, wobei dann nur jedes Gesenkteil um das halbe Maß der Hinterschneidung zu verdrehen ist. Das Verdrehen des Obergesenks und/oder Untergesenks erfolgt vorzugsweise nach dem vollständigen Zusammenfahren des Gesenks, kann aber auch während des Zusammenfahrens des Gesenks kontinuierlich erfolgen. Dadurch können einzelne Schaufeln oder auch Gruppen mehrerer Schaufeln beim Schmieden weitestgehend vorgeformt werden, wobei die geschmiedete Kontur noch ein ausreichendes Aufmaß zur Endbearbeitung der Schaufeln aufweist, damit die Flächen aller Schaufeln vollständig von der nachfolgenden spanenden Bearbeitung erfasst werden. Durch ein derartiges konturnahes Schmieden des Rohlings braucht im Vergleich zu herkömmlichen Verfahren nur ein Bruchteil des Volumens des geschmiedeten Rohlings zerspant zu werden. Dadurch kann der Zerspanvorgang erheblich rascher erfolgen, wodurch Maschinenlaufzeiten, insbesondere von Fräsmaschinen zur Durchführung der spanenden Bearbeitung, eingespart werden können. Aber auch der Materialverbrauch wird durch das erfindungsgemäße Verfahren reduziert; es geht nämlich weniger Rohmaterial verloren.

Des Weiteren ist vorgesehen, den Rohling derart konturnah zu schmieden, dass nur noch das Schmiedeaufmaß spanend bearbeitet werden muss. Vorzugsweise werden beim Schmieden Zwischenräume zwischen wenigstens einigen Schaufeln mindestens teilweise hergestellt. Dadurch wird beim Schmieden bereits die Kontur der Schaufeln vorgeformt. Entweder wird die Kontur jeder Schaufel vorgeformt oder es werden bei Bauteilen mit Gruppen von kleinen und großen Schaufeln die Umrisslinien jeder Gruppe aus einer großen und einer kleinen Schaufel vorgeformt. Die Schaufeln erhalten dabei prinzipiell schon wenigstens annähernd die Gestalt der fertigen Schaufeln, wobei jedoch ein Schmiedeaufmaß erhalten bleibt, damit der so hergestellte Schmiederohling noch über genügend Material verfügt, um die Kontur des fertigen Bauteils, insbesondere die Flächen der Schaufeln, vollflächig durch eine sparende Bearbeitung bildenzu können. Dadurch lassen sich durch das erfindungsgemäße Verfahren beschaufelte Bauteile bilden, die hinsichtlich ihrer Präzision sich nach bekannten Verfahren hergestellten Bauteilen nicht unterscheiden. Jedoch kann durch das Schmieden des Rohlings mit Zwischenräumen zwischen benachbarten Schaufeln und/oder mit dem erforderlichen Schmiedeaufmaß der Zerspanungsaufwand deutlich reduziert werden.

Vorzugsweise wird der Rohling derart gesenkgeschmiedet, dass überwiegend nur noch das Schmiedeaufmaß spanend bearbeitet werden muss. Zweckmäßigerweise werden dabei wenigstens größtenteils Zwischenräume zwischen benachbarten Schaufeln oder Gruppen mehrerer Schaufeln hergestellt. Diese Zwischenräume sind so bemessen, dass sie gegenüber dem fertigen beschaufelten Bauteil im Wesentlichen nur noch um das Schmiedemaß kleiner sind und dadurch im Bereich der geschmiedeten Zwischenräume nur noch das Schmiedemaß bei der Endbearbeitung spanend vom Rohling entfernt werden muss.

Die zuvor beschriebenen Verfahren eignen sich vor allem zur Herstellung spanend zu bearbeitender Rohlinge für Schaufeln aufweisende Laufräder, Leiträder bzw. Leitkränze von Verdichtern, Turboladern bzw. Pumpen oder auch Propellern bzw. einzelnen Schaufeln. Die genannten beschaufelten Bauteile erfordern wegen ihrer komplexen und vielfach gewölbten Kontur eine aufwändige, kostenintensive spanende Bearbeitung. Durch die Verwendung von konturnah geschmiedeten Rohlingen zur Herstellung der genannten beschaufelten Bauteile kann die nachfolgende spanende Bearbeitung dieser Rohlinge mit einem geringeren Zerspanvolumen durchgeführt werden, wodurch beträchtliche Kosten für den Zerspanvorgang eingespart werden können, ohne dass dadurch der Schmiedevorgang sich in entsprechendem Maße verteuert, weil das konturnahe Schmieden abgesehen von nur einmalig anfallenden geringfügig höheren Gesenkkosten im Vergleich zum Schmieden von Rohlingen mit grober Kontur keine nennenswerten Mehrkosten verursacht.

Die Verwendung eines konturnah gesenkgeschmiedeten Rohlings zur spanenden Herstellung der genannten beschaufelten Bauteile wie insbesondere Verdichter, Turbolader, Pumpen oder Propeller ist vor allem deshalb besonders wirtschaftlich, weil die genannten Bauteile überwiegend eine Vielzahl von Schaufeln aufweisen.

Ein Gesenk zur Lösung der eingangs genannten Aufgabe weist die Merkmale des Anspruchs 11 auf. Dadurch, dass mindestens Teile des Obergesenks um eine jeweils in Pressrichtung verlaufende Achse verdrehbar sind, können in einfacher Weise Hinterschneidungen des zu schmiedenden Rohlings erzeugt werden. Vor allem lassen sich die Hinterschneidungen mit verhältnismäßig einfachen Mitteln bilden, ohne dass dadurch das Gesenk komplexer wird oder zusätzliche Teile erfordert.

Alternativ ist es auch denkbar, die Oberform und die Unterform relativ zueinander zu verdrehen oder auf einer schräg oder senkrecht zur Pressrichtung verlaufenden Bahn zu verschieben.

Mit den erfindungsgemäßen Verfahren und das erfindungsgemäße Gesenk lassen sich alle gängigen Materialien für beschaufelte Bauteile bearbeiten, und zwar insbesondere alle schmiedbaren Metalle, insbesondere Titan, Aluminium und Nickelbasislegierungen.

Nachfolgend wird ein bevorzugtes Ausführungsbeispiel der Erfindung, und zwar die Herstellung eines beschaufelten Bauteils, das als rotationssymmetrisches Laufrad ausgebildet ist, näher beschrieben:

Als Ausgangsmaterial für das herzustellende Laufrad dient ein Abschnitt einer Stange oder ein Knüppel aus einem schmiedbaren Werkstoff. Der Knüppel bzw. die Stange sind vorgeschmiedet, stranggegossen, stranggepresst und/oder gewalzt. Aus einem Abschnitt einer solchen Stange oder dem Knüppel wird ein Rohling für das herzustellende Laufrad geschmiedet.

Das Schmieden erfolgt je nach Art des verwendeten Werkstoffs im warmen oder auch kalten Zustand. Geschmiedet wird in einem weiter unten noch näher beschriebenem Gesenk, und zwar erfindungsgemäß konturnah. Das heißt, der beim Schmieden hergestellte Rohling wird nicht lediglich in eine Gestalt gebracht, die der Hüllkontur des herzustellenden Laufrads zuzüglich dem Schmiedemaß entspricht; vielmehr erhält der Rohling beim erfindungsgemäßen konturnahen Schmieden eine Kontur, die weitestgehend an das herzustellende fertige Laufrad angenähert ist. Diese Kontur weist Vertiefungen auf, die sich in die Hüllkontur des Laufrads hinein erstrecken. Durch die Vertiefungen werden Zwischenräume zwischen benachbarten Schaufeln oder Gruppen mehrerer Schaufeln bereits beim Schmieden mindestens teilweise hergestellt. Die Vertiefungen haben solche Abmessungen, dass ein Schmiedeaufmaß erhalten bleibt, damit die Schaufeln vollflächig spanend endbearbeitet werden können.

Bei Laufrädern mit gleichen Schaufeln befindet sich ein geschmiedeter Zwischenraum zwischen allen benachbarten Schaufeln, wobei sich der Zwischenraum mindestens teilweise zwischen benachbarten Schaufeln erstreckt. Bei Laufrädern mit Gruppen aus großen oder kleinen Schaufeln sind die Zwischenräume so ausgebildet, dass sie sich zwischen jeweils einem Schaufelpaar aus einer großen und einer kleinen Schaufel erstrecken, aber nicht zwischen einer großen Schaufel und die ihr zugeordnete kleine Schaufel.

Überwiegend verfügen die Laufräder über in Richtung ihrer Längsmittelachse leicht schräg gestellte Schaufeln. Dadurch entstehen an der Rückseite der Schaufeln Hinterschneidungen. Diese werden zum Teil auch beim Gesenkschmieden gebildet, und zwar durch das Verdrehen von einem Gesenkteil, insbesondere einer Gesenkhälfte, oder eine Relativverdrehung beider Gesenkhälften zueinander. Vorzugsweise wird die jeweilige Gesenkhälfte um eine in Pressrichtung verlaufende Achse gedreht. Diese Achse läuft bei rotationssymmetrischen Laufrädern gleichzeitig entlang der Längsmittelachse der Laufräder. Das Verdrehen der mindestens einen Gesenkhälfte, beispielsweise des Obergesenks, kann nach dem Schließen des Gesenks erfolgen, wenn also beide Gesenkhälften zusammengefahren sind. Beim Auseinanderfahren der Gesenkhälften wird das Obergesenk in entgegengesetzter Richtung verdreht. Denkbar ist es aber auch, mindestens das Obergesenk während des Zusammenfahrens der Gesenkhälften kontinuierlich zu verdrehen.

Durch das Verdrehen mindestens von Teilen des Gesenks während des Gesenkschmiedens können die Zwischenräume zwischen benachbarten Schaufeln der schrägen Richtung der Schaufeln folgend ebenfalls schräg verlaufen, wodurch ein besonders konturnahes und hinterschnittenes Gesenkschmieden des Rohlings möglich ist.

Nachdem der Rohling gesenkgeschmiedet ist, wird hieraus spanend, und zwar vorzugsweise durch Fräsen, das fertige Laufrad hergestellt. Das Fräsen erfolgt vorzugsweise mit einer fünfachsigen CNC-Fräsmaschine. Dabei werden mindesten die Flächen aller Schaufeln vollständig spanend bearbeitet. Durch das erfindungsgemäß konturnahe Gesenkschmieden braucht spanend im Wesentlichen nur noch das Schmiedeaufmaß beseitigt zu werden. Dadurch ist durch die spanende Bearbeitung nur noch maximal die Hälfte des Volumens des Rohlings, vorzugsweise deutlich weniger, durch Zerspanen abzutragen. Die Laufzeiten der Maschinen zur spanenden Bearbeitung des Rohlings und die Menge des zu zerspanenden und somit ungenutzten Volumens des Rohlings können so gegenüber dem Stand der Technik reduziert werden.

Der nach dem beschriebenen Verfahren hergestellte Rohling aus z. B. Titan, Aluminium und Nickelbasislegierungen, aber auch andere Knetlegierungen, eignet sich besonders zur spanenden Endbearbeitung von beschaufelten Bauteilen für Verdichter, und zwar sowohl Verdichter für den Flugzeugtriebwerksbau als auch stationären Verdichtern sowie Verdichter für Gas-, Dampf- oder sonstigen Turbinen. Der nach dem erfindungsgemäßen Verfahren hergestellte Rohling kann aber auch zur spanenden Herstellung von Laufrädern für Turbolader, für Pumpenräder, für Propeller und einzelne Schaufeln dienen.

Ein Gesenk zur Herstellung des Rohlings für ein vorzugsweise rotationssymmetrisches Laufrad weist ein Untergesenk und ein Obergesenk auf. Das Obergesenk ist gegenüber dem Untergesenk auf- und abbewegbar, und zwar in Pressrichtung. Die Pressrichtung entspricht dabei der Längsmittelachse, also der Drehachse, des Laufrads. Die Gravur im Obergesenk weist auch Vorsprünge auf, die dazu dienen, beim Gesenkschmieden Zwischenräume zwischen benachbarten Schaufeln oder benachbarten Gruppen kleiner und großer Schaufeln herzustellen.

Bei Laufrädern mit schräggestellten Schaufeln weist der Zwischenraum an der Rückseite der jeweiligen Schaufel eine Hinterschneidung auf. Der Zwischenraum verläuft dann an der Rückseite der jeweiligen Schaufel schräg einwärts gerichtet, springt also zurück. Um solche Hinterschneidungen beim Gesenkschmieden herstellen zu können, wird das Obergesenk um eine in Pressrichtung verlaufende Achse, die vorzugsweise auf der Längsmittelachse des Schaufelrades liegt, verdreht. Demzufolge ist das Obergesenk nicht nur in Pressrichtung gegenüber dem feststehenden Untergesenk auf- und abbewegbar; das Obergesenk ist auch drehbar um die Längsmittelachse des Schaufelrads oder Laufrads. Dem Obergesenk ist dazu eine entsprechender Antrieb zugeordnet. Dieser kann das Obergesenk entweder nach dem Zufahren des Gesenks, also nach vollständigem Absenken des Obergesenks auf das Untergesenk verdrehen oder es erfolgt beim Herunterfahren des Obergesenks kontinuierlich eine Verdrehung desselben.

Die beschriebenen Verfahren sowie das beschriebene Gesenk eignen sich nicht nur zur wirtschaftlichen Herstellung eines in der vorstehenden Beschreibung exemplarisch erwähnten Laufrades, sondern auch zur Herstellung anderer beschaufelter Bauteile für Verdichter, Turbolader, Pumpen oder auch Propeller.

## Patentansprüche

1. Verfahren zur Herstellung von Rohlingen für beschaufelte Bauteile von insbesondere Strömungsmaschinen, wobei der Rohling aus einem schmiedbaren Werkstoff geschmiedet wird, der Rohling durch konturnahes Gesenkschmieden weitestgehend vorgeformt wird, beim Gesenkschmieden der Rohling mit mindestens einer Hinterschneidung versehen wird, **dadurch gekennzeichnet, dass** die mindestens eine Hinterschneidung durch Verdrehen des Gesenks oder mindestens einer Gesenkhälfte hergestellt wird.

2. Verfahren nach Anspruch 1, **dadurch gekennzeichnet, dass** der Rohling derart konturnah geschmiedet wird, dass im Wesentlichen nur noch das Schmiedeaufmaß spannend bearbeitet werden muss.

3. Verfahren nach Anspruch 2, **dadurch gekennzeichnet, dass** der Rohling beim Gesenkschmieden mit einer Außenkontur versehen wird, die zumindest teilsweise der Kontur des fertigen Bauteils zuzüglich des Schmiedeaufmaßes entspricht, vorzugsweise beim Gesenkschmieden zumindest ein Teil der Schaufeln mit einem Schmiedeaufmaß geschmiedet wird.

4. Verfahren nach einem der vorhergehenden Ansprüche, **dadurch gekennzeichnet, dass** beim Schmieden mindestens teilweise Zwischenräume zwischen wenigstens einigen Schaufeln im Rohling hergestellt werden.

5. Verfahren nach Anspruch 4, **dadurch gekennzeichnet, dass** beim Gesenkschmieden Zwischenräume zwischen mindestens einigen Schaufeln wenigstens teilweise, vorzugsweise größtenteils, gebildet werden.

6. Verfahren nach Anspruch 4 oder 5, **dadurch gekennzeichnet, dass** beim Gesenkschmieden wenigstens ein mindestens teilweise hinterschnittener Zwischenraum zwischen mindestens einigen benachbarten Schaufeln hergestellt wird.

7. Verfahren nach einem der vorhergehenden Ansprüche, **dadurch gekennzeichnet, dass**, zur Herstellung der mindestens einen Hinterschneidung eine Gesenkhälfte um vorzugsweise eine in Pressrichtung verlaufende Achse verdreht wird oder beide Gesenkhälften gegeneinander um jeweils eine in Pressrichtung verlaufende Achse verdreht werden.

8. Verfahren nach einem der vorhergehenden Ansprüche, **dadurch gekennzeichnet, dass** das Obergesenk um eine in Pressrichtung verlaufende Längsmittelachse verdreht wird, vorzugsweise das Obergesenk bei geschlossenem Gesenk um die Längsmittelachse verdreht wird.

9. Verfahren nach einem der vorhergehenden Ansprüche, **dadurch gekennzeichnet, dass** das Obergesenk und das Untergesenk gegensinnig verdreht werden, und zwar vorzugsweise um eine gemeinsame Längsmittelachse.

10. Verfahren zur Herstellung von Schaufeln, Propeller oder Schaufeln aufweisende Laufräder, Leiträder bzw. Leitkränze von Strömungsmaschinen, insbesondere Turbinen, Verdichtern, Turboladern bzw. Pumpen durch spanende Bearbeitung eines Rohlings, der nach einem oder mehreren der Ansprüche 1 bis 9 hergestellt worden ist.

11. Gesenk zum Schmieden von mit mindestens einer Hinterschneidung versehenen Rohlingen für beschaufelte Bauteile mit einem Untergesenk und einem Obergesenk, wobei mindestens das Obergesenk in Pressrichtung gegen das Untergesenk bewegbar ist, **dadurch gekennzeichnet, dass** beim durch konturnahes Gesenkschmieden erfolgenden weitestgehenden Verformen des jeweiligen Rohlings mit mindestens einer Hinterschneidung das Obergesenk um eine in Pressrichtung verlaufende Achse gegenüber dem Untergesenk verdrehbar ausgebildet ist und zum Verdrehen des Obergesenks gegenüber dem Untergesenk dem Obergesenk ein Antrieb zugeordnet ist.

## Claims

1. A method of producing blanks for bladed components for in particular fluid-flow machines, with the blank being forged from a forgeable material, the blank drop- forged to near-net shape and being provided during drop forging with at least one undercut, **characterized in that** the at least one undercut is produced by rotation of the die or at least of a die half.

2. The method according to Claim 1, **characterized in that** the blank is forged to near-net shape in such a way that essentially only the forging allowance has to be machined.

3. The method according to Claim 2, **characterized in that** the blank, during the drop forging, is provided with an outer contour which at least partially corresponds to the contour of the finished component plus the forging allowance, preferably with at least some of the blades being forged with a forging allowance.

4. The method according to one of the preceding Claims, **characterized in that** intermediate spaces are at least partly produced between at least some of the blades in the blank during the forging.

5. The method according to Claim 4, **characterized in that**, during the drop forging, intermediate spaces are formed at least partially, preferably to a large extent, between at least some blades.

6. The method according to Claim 4 or 5, **characterized in that**, during the drop forging, at least one at least partially undercut intermediate space is produced between at least some adjacent blades.

7. The method according to one of the preceding Claims, **characterized in that** to produce the at least one undercut, a die half is rotated preferably about an axis running in the pressing direction or both die halves are rotated relative to one another about a respective axis running in the pressing direction.

8. The method according to one of the preceding Claims, **characterized in that** the top die is rotated about an axis running in the pressing direction, preferably the top die is rotated about the longitudinal centre axis when the die is closed.

9. The method according to one of the preceding Claims, **characterized in that** the top die and the bottom die are rotated in opposite directions, preferably about a common longitudinal centre axis

10. A method for producing blades, propellers or bladed rollers, guide wheels or guide rings of fluid-flow machines, in particular turbines, compressors, turbochargers or pumps, through the machining of a blank that is produced according to one or more of the Claims 1 to 9.

11. A die for forging blanks, which are provided with at least one undercut, for bladed components and having at least a bottom die and a top die, with at least the top die being movable in the pressing direction towards the bottom die, **characterized in that**, during the forming of the respective blank having at least one undercut, to the greatest possible extent to a near-net shape by drop forging, the top die is configured to rotate about an axis running in the pressing direction relative to the bottom die, with a drive being assigned to the upper die for rotating the top die relative to the bottom die.

## Revendications

1. Procédé de fabrication d'ébauches pour composants à aubes en particulier de turbomachines, dans lequel l'ébauche est forgée à partir d'un matériau forgeable, l'ébauche est très amplement préformée par matriçage proche du contour, et l'ébauche est pourvue d'au moins une contre-dépouille lors du matriçage, **caractérisé par le fait que** la ou les contre-dépouilles sont formées par rotation de la matrice ou d'au moins une moitié de celle-ci.

2. Procédé selon la revendication 1, **caractérisé par le fait que** l'ébauche est forgée près du contour de façon telle qu'il ne faille plus enlever par usinage qu'en gros la surépaisseur de forgeage.

3. Procédé selon la revendication 2, **caractérisé par le fait que** l'ébauche est, lors du matriçage, pourvue d'un contour extérieur qui correspond au moins en partie au contour du composant fini augmenté de la surépaisseur de forgeage, et de préférence, lors du matriçage, au moins une partie des aubes est forgée avec une surépaisseur de forgeage.

4. Procédé selon l'une des revendications précédentes, **caractérisé par le fait que** lors du forgeage, des intervalles au moins partiels sont formés entre au moins quelques aubes dans l'ébauche.

5. Procédé selon la revendication 4, **caractérisé par le fait que** lors du matriçage, des intervalles sont formés au moins en partie, de préférence en majeure partie, entre au moins quelques aubes.

6. Procédé selon l'une des revendications 4 et 5, **caractérisé par le fait que** lors du matriçage, au moins un intervalle au moins en partie en contre-dépouille est formé entre au moins quelques aubes voisines.

7. Procédé selon l'une des revendications précédentes, **caractérisé par le fait que** pour la formation de la contre-dépouille ou des contre-dépouilles, une moitié de matrice est tournée autour de préférence un axe s'étendant dans la direction de pressage, ou bien les deux moitiés de matrice sont tournées l'une par rapport à l'autre chacune autour d'un axe s'étendant dans la direction de pressage.

8. Procédé selon l'une des revendications précédentes, **caractérisé par le fait que** la matrice supérieure est tournée autour d'un axe longitudinal s'étendant dans la direction de pressage, de préférence est tournée autour de cet axe la matrice fermée.

9. Procédé selon l'une des revendications précédentes, **caractérisé par le fait que** la matrice supérieure et la matrice inférieure sont tournées en sens contraire, et ce de préférence autour d'un axe longitudinal commun.

10. Procédé de fabrication d'aubes, d'hélices ou de roues mobiles, roues directrices ou couronnes directrices présentant des aubes de turbomachines, en particulier de turbines, compresseurs, turbocompresseurs ou pompes, par usinage d'une ébauche qui a été fabriquée selon une ou plusieurs des revendications 1 à 9.

11. Matrice de forgeage d'ébauches pourvues d'au moins une contre-dépouille pour composants à aubes, comprenant une matrice inférieure et une matrice supérieure, au moins la matrice supérieure pouvant être déplacée par rapport à la matrice inférieure dans la direction de pressage, **caractérisée par le fait que** lors de la plus ample déformation de l'ébauche produite par matriçage proche du contour avec au moins une contre-dépouille, la matrice supérieure est agencée de façon à pouvoir être tournée par rapport à la matrice inférieure autour d'un axe s'étendant dans la direction de pressage, et pour la rotation de la matrice supérieure par rapport à la matrice inférieure, un dispositif d'entraînement est associé à la matrice supérieure.
